(19) Europäisches Patentamt

European Patent Office

Office européen des brevets

(11) **EP 1 429 876 B1**

## (12) EUROPÄISCHE PATENTSCHRIFT

(45) Veröffentlichungstag und Bekanntmachung des Hinweises auf die Patenterteilung:
**16.02.2005 Patentblatt 2005/07**

(21) Anmeldenummer: 02777071.8

(22) Anmeldetag: **12.09.2002**

(51) Int Cl.⁷: **B21B 21/00**, F16F 15/22

(86) Internationale Anmeldenummer:
**PCT/EP2002/010219**

(87) Internationale Veröffentlichungsnummer:
**WO 2003/028913 (10.04.2003 Gazette 2003/15)**

(54) **ANTRIEBSSYSTEM FÜR EIN WALZWERK**

DRIVE SYSTEM FOR A ROLLING MILL

SYSTEME D'ENTRAINEMENT POUR LAMINOIR

(84) Benannte Vertragsstaaten:
**AT BE BG CH CY CZ DE DK EE ES FI FR GB GR IE IT LI LU MC NL PT SE SK TR**

(30) Priorität: **25.09.2001 DE 10147046**

(43) Veröffentlichungstag der Anmeldung:
**23.06.2004 Patentblatt 2004/26**

(73) Patentinhaber: **SMS Meer GmbH**
**41069 Mönchengladbach (DE)**

(72) Erfinder:
• **STINNERTZ, Horst**
**47877 Willich (DE)**

• **Baensch, Michael**
**41069 Mönchengladbach (DE)**

(74) Vertreter: **Valentin, Ekkehard, Dipl.-Ing.**
**Patentanwälte Hemmerich & Kollegen,**
**Hammerstrasse 2**
**57072 Siegen (DE)**

(56) Entgegenhaltungen:
**DE-A- 3 725 497      US-A- 3 337 209**

• **PATENT ABSTRACTS OF JAPAN vol. 013, no. 055 (M-795), 8. Februar 1989 (1989-02-08) & JP 63 260608 A (SUMITOMO HEAVY IND LTD), 27. Oktober 1988 (1988-10-27)**

EP 1 429 876 B1

**Beschreibung**

Die Erfindung betrifft ein Antriebssystem für ein Walzwerk, insbesondere für ein Kaltpilgerwalzwerk, mit mindestens einem hin- und herbewegbaren Walzgerüst, mindestens einem Kurbeltrieb, der einen Kurbelarm mit Ausgleichsgewicht zum zumindest teilweisem Ausgleich der vom Walzgerüst erzeugten Massenkräfte, einen Antrieb und eine Schubstange aufweist, die Walzgerüst und Kurbelarm gelenkig miteinander verbindet, und mindestens einer zum Ausgleich von Massenkräften und/oder Massenmomenten exzentrisch drehbar angeordneten Gegenmasse.

Ein gattungsgemäßer Antrieb für ein Kaltpilgerwalzwerk ist beispielsweise aus der **DE 43 36 422 C2** bekannt. Zur Durchführung des Kaltpilgerprozesses ist ein mit einem Kaltpilgerwalzenpaar ausgestattetes Walzgerüst erforderlich, das oszillierend angetrieben wird. Hierzu wird ein Kurbeltrieb eingesetzt, der von einem Motor angetrieben wird. Der Kurbeltrieb ist zum Ausgleich der Massenkräfte des Walzgerüsts mit einem Ausgleichsgewicht versehen. Allerdings reicht dieses Gewicht nicht für einen hinreichenden Ausgleich der Massenkräfte und Massenmomente aus.

Die Produktivität eines Kaltpilgerwalzwerks ist direkt von der Hubzahl des Walzgerüsts pro Zeiteinheit abhängig, weshalb aus Wirtschaftlichkeitsgründen eine möglichst große Anzahl an Arbeitshüben pro Minute angestrebt werden muss. Dies bedeutet jedoch auch große Massenkräfte, die sowohl das Antriebssystem und namentlich dessen Lager sowie auch das Fundament und damit die Umgebung belasten.

In der **DE 43 36 422 C2** ist daher vorgesehen, dass der Kurbeltrieb über eine Verzahnung eine weitere Welle antreibt, auf der eine Gegenmasse hinsichtlich des Schwerpunkts exzentrisch angeordnet ist. Diese Gegenmasse läuft bei Drehung des Kurbeltriebs gegensinnig um und ist so in der Lage, ausgleichende Massenkräfte bzw. Massenmomente zu erzeugen, so dass sich insgesamt ein Massenkraftausgleich im gesamten Antriebssystem ergibt.

Nachteilig ist bei der bekannten Ausgestaltung, dass sich insgesamt eine recht aufwendige Konstruktion des gesamten Antriebssystems ergibt, weil eine Vielzahl von Maschinenelementen - über Verzahnungen ineinander eingreifend - erforderlich sind. Damit steigen auch die Kosten des Antriebssystems und damit des Kaltpilgerwalzwerks, wobei hierunter nicht nur die Investitionskosten für die Anlage selber zu verstehen sind, sondern auch die Kosten für das Anlagenfundament, für Ersatz- und Verschleißteile und für Wartung und Reparatur.

Aus der **DE-PS 962 062** ist ein Antriebssystem für ein Kaltpilgerwalzwerk bekannt, bei dem die Kurbelwelle zum Antrieb des Walzgerüsts mit Fliehgewichten und einem vertikal oszillierenden Ausgleichsgewicht zum Ausgleich der Massenkräfte erster Ordnung sowie der Massenmomente im Antrieb ausgestattet ist.

Nachteilig ist bei dieser Lösung, dass das Fundament des Walzwerks sehr aufwendig und damit teuer ausgestaltet ist, da für das vertikale Eintauchen des Ausgleichsgewichts in das Fundament gesorgt werden muss. Es wird hierbei ein großer und tiefer Keller benötigt, was die Kosten des Walzwerks entsprechend steigen lässt.

Die **DE 36 13 036 C1** offenbart einen Antrieb für das Walzgerüst eines Kaltpilgerwalzwerks, wobei ein Planetkurbeltrieb zum Antrieb und Ausgleich von Massenkräften und Massenmomenten zum Einsatz kommt.

Wenngleich mit dieser Lösung ein optimaler Massenausgleich erfolgen kann, eignet sich dieser Antrieb nur bei kleineren Kaltpilgerwalzwerken, weil bei größeren Anlagen die Baugröße eines solchen Antriebssystems überproportional steigt und damit hohe Kosten verursacht.

Alle bekannten Antriebssysteme für Kaltpilgerwalzwerke haben daher gravierende Nachteile, sei es die ungenügende Reduzierung der Massenkräfte bzw. Massenmomente, hohe Investitions- bzw. Fundamentkosten und/oder eine aufwendige Montage bei der Fertigung bzw. bei der Reparatur und Instandhaltung.

Der Erfindung liegt daher die **Aufgabe** zugrunde, ein Antriebssystem für ein gattungsgemäßes Kaltpilgerwalzwerk so zu gestatten, dass bei möglichst einfachem und damit kostengünstigem Aufbau die Massenkräfte auf ein zulässiges Maß beschränkt werden können.

Die **Lösung** dieser Aufgabe ist erfindungsgemäß dadurch gekennzeichnet, dass die mindestens eine Gegenmasse von einem vom Antrieb des Kurbeltriebs unabhängigen, separaten Antrieb rotatorisch antreibbar ist.

Die Gegenmasse/n zum Ausgleich der Massenkräfte bzw. Massenmomente werden also unabhängig vom Antrieb des Kurbeltriebs mit einem eigenen Motor angetrieben, was zu besonderen Vorteilen führt:

Zunächst einmal wird ein hinreichender Ausgleich der Massenkräfte und Massenmomente des Walzgerüsts erzielt, so dass das Antriebssystem relativ erschütterungsfrei arbeiten kann, wodurch das Fundament und die Umgebung geschont werden. Das Antriebssystem arbeitet zuverlässig und hat eine hohe Lebensdauer; die Kosten für Wartung und Reparatur sind gering.

Durch den Massenkraft- und Massenmomentausgleich erfolgt auch eine gleichförmigere Bewegung des Kurbelantriebs und damit des Walzgerüsts, was bei vorbekannten Antrieben nicht immer gegeben ist.

Die Investitionskosten für das Kaltpilgerwalzwerk sind vergleichsweise gering, weil das Antriebssystem einfach aufgebaut ist Auch die Montagekosten des Antriebssystems sind daher niedrig. Gleichermaßen werden keine besonderen Ansprüche an das Fundament gestellt. Der Fundamentklotz unter dem Kurbeltrieb und das Maschinenbett können unterstützend gleichwohl so ausgelegt werden, daß sich Fundamentmomente auffangen lassen.

Bevorzugt ist vorgesehen, dass der unabhängige Antrieb bzw. die unabhängigen Antriebe zum Antreiben der Gegenmasse bzw. Gegenmassen im zur Drehrichtung des Kurbelarms gegenläufigen Drehsinn geeignet ist bzw. sind.

Für einen optimalen Massenausgleich ist es weiter von Vorteil, dass die Massen des Walzgerüsts, des Ausgleichsgewichts und der Gegenmasse bzw. Gegenmassen - unter Einbeziehung der Massen der zum Einsatz kommenden Kurbeln bzw. Zugstangen - so gewählt sind, dass die Gerüstmassenkräfte erster Ordnung im Betrieb des Antriebssystems zumindest weitgehend, vorzugsweise vollständig, ausgeglichen werden. Hierzu trägt in vorteilhafter Weise bei, wenn eine die Gegenmasse aufnehmende Ausgleichswelle in Walzrichtung hinter der Kurbelwelle im wesentlichen in gleicher Höhe mit der Kurbelwelle angeordnet ist. Bei dieser Ausführung kann nach einer Ausgestaltung der separate Antrieb der Gegenmasse bzw. der Ausgleichswelle mittels eines Stirnradsatzes erfolgen, der ein Ritzel auf der Motorwelle umfaßt, das mit Übersetzung einerseits ein Zahnrad auf der Kurbelwelle antreibt, wobei dieses Zahnrad andererseits mit einem gleichgroßen Zahnrad der Ausgleichswelle kämmt.

Hinsichtlich des Massenkraft- bzw. Massenmomentausgleichs ist es weiterhin vorteilhaft, wenn je zwei Gegenmassen spiegelbildlich zur Mittelebene des Antriebssystems angeordnet sind; hinsichtlich dieser Ebene ergibt sich dadurch in einfacher Weise ein Ausgleich von Massenmomenten.

Der separate Antrieb für die Gegenmassen ist mit Vorteil ein Elektromotor. Insbesondere kann ein Servomotor zum Einsatz kommen, also ein Motor, der nach Vorgabe von Drehgeschwindigkeit und Drehwinkel diese Parameter selbsttätig einhält, d. h. regelt. Zwischen dem Antrieb des Kurbelarms und dem oder den separaten Antrieben sind vorzugsweise Mittel zum Steuern oder zum Regeln des oder der separaten Antriebe angeordnet; die separaten Antriebe werden also durch diese Mittel in Abhängigkeit vom Drehwinkel und/oder von der Drehgeschwindigkeit des Antriebs des Kurbelarms gesteuert bzw. geregelt.

Durch die Mittel kann sichergestellt werden, dass der Antrieb des Kurbelarms und der Antrieb der Gegenmasse bzw. der Gegenmassen mit derselben Drehgeschwindigkeit erfolgen. Ferner kann ein phasengenaues Betreiben des Antriebs des Kurbelarms und des oder der separaten Antriebe erfolgen. Mit besonderem Vorteil ist vorgesehen, dass die Mittel zum drehgeschwindigkeits- und winkelsynchronen Betreiben des Antriebs des Kurbelarms und des oder der separaten Antriebe geeignet sind. Auf diese Weise wird ein optimaler Massenausgleich erreicht.

Zum Ausgleich von Massenmomenten kann schließlich in vorteilhafter Weise vorgesehen werden, dass der Drehpunkt der Gegenmasse bzw. der Gegenmassen so gewählt ist, dass unter Einbeziehung der Massenkräfte des Walzgerüsts und/oder des Ausgleichsgewichts - unter weiterer Einbeziehung der Massen der zum Einsatz kommenden Kurbeln bzw. Zugstangen - die Massenmomente aller Massen des Antriebssystems zumindest weitgehend ausgeglichen werden.

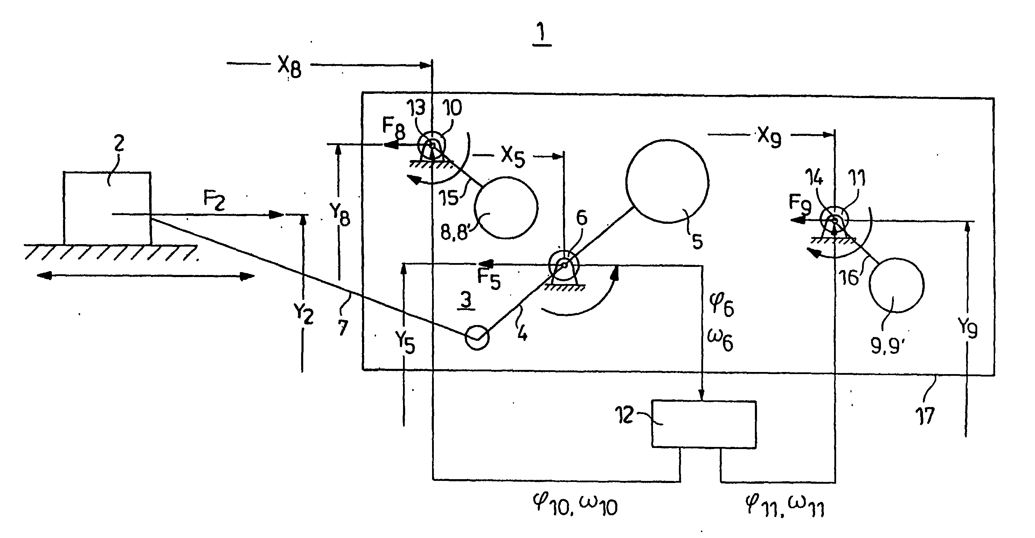

In der Zeichnung ist ein Ausführungsbeispiel der Erfindung dargestellt. Die einzige Figur zeigt schematisch die Seitenansicht eines Antriebssystems für ein Kaltpilgerwalzwerk.

Die Figur zeigt den Aufbau eines Antriebssystems 1 eines Kaltpilgerwalzwerkes, das als solches nicht dargestellt ist. In einem Walzgerüst 2 ist ein ebenfalls nicht dargestelltes Kaltpilgerwalzenpaar angeordnet, mittels dem der bekannte Kaltpilgerwalz-Prozess durchgeführt wird.

Zum Durchführen dieses Prozesses muss das Walzgerüst 2 eine oszillierende Bewegung - also eine hin- und hergehende Bewegung - ausführen. Um dies zu bewerkstelligen, ist ein Kurbeltrieb 3 vorgesehen, der einen Kurbelarm 4 bzw. eine Kurbelwelle mit mindestens einer Kröpfung und mit einem in Bezug auf den Lagerpunkt exzentrisch angeordneten Ausgleichsgewicht 5 aufweist. Kurbelarm 4 und Walzgerüst 2 sind mit einer Schubstange 7 verbunden, die sowohl am Kurbelarm 4 als auch am Walzgerüst 2 gelenkig angeordnet ist. Zum oszillatorischen Antrieb des Walzgerüsts 2 wird der Kurbeltrieb 3 mittels eines Antriebs 6 (als Elektromotor ausgeführt) bewegt. Dabei dreht der Antrieb 6 den Kurbelarm 4 sowohl mit einem Drehwinkel $\varphi_6$ als auch mit einer Drehgeschwindigkeit $\bar{\omega}_6$.

Das Ausgleichsgewicht 5 sorgt bereits für einen teilweisen Ausgleich der Massenkräfte, die bei oszillierender Bewegung des Walzgerüsts 2 von diesem verursacht werden; im vorliegenden Falle wird etwa die Hälfte der Massenkraft des Walzgerüsts 2 durch diejenige des Ausgleichsgewichts 5 ausgeglichen. Wie schematisch in der Figur gesehen werden kann, ist nämlich die Massenkraft $F_2$ des Walzgerüsts 2 entgegengerichtet zur Massenkraft $F_5$ des Ausgleichsgewichts 5, so dass es zu der teilweisen Kompensation dieser Kräfte kommt.

Allerdings reicht dieser Teil-Ausgleich der Massenkräfte für einen akzeptablem Betrieb des Antriebssystems 1 nicht aus.

Dies wird erst durch die Gegenmassen 8 und 9 erreicht. Diese Massen 8, 9 sind im Bezug auf ihren jeweiligen Drehpunkt 13 bzw. 14 - der mit der Exzenterwelle zusammenfällt bzw. von dieser definiert wird - exzentrisch an Kurbeln 15 bzw. 16 gelagert. Die Rotation der Gegenmassen 8 und 9 wird durch Antriebe 10 bzw. 11 bewerkstelligt.

Es sei angemerkt, dass die Gegenmassen 8 bzw. 9 in Teilmassen aufgeteilt sein können, die normal zur Zeichnungsebene der Figur versetzt angeordnet sind. Die Gegenmassen 8 und 8' bzw. 9 und 9' sind dann spiegelbildlich zur Mittelebene des Kaltpilgerwalzwerks positioniert. Weiterhin ist ein Antriebssystem mit nur einer Ausgleichswelle möglich, auf der die Gegenmassen 8 bzw. 8 und 9 angeordnet sind.

Bei Drehung der Gegenmassen 8 bzw. 9 verursachen diese in ihren Drehpunkten 13 bzw. 14 Massenkräfte $F_8$ bzw. $F_9$. Bei richtiger phasenorientierter Drehung der Gegenmassen 8, 9 relativ zur Bewegung des Kurbelarms 4 summieren sich diese beiden Massenkräfte mit denjenigen des Walzgerüsts 2 ($F_2$) und dem Ausgleichsgewicht 5 ($F_5$) zu Null, so dass ein optimaler Masserikraftausgleich erzielt wird.

Wesentlich ist dabei die hinsichtlich der Phase und der Drehgeschwindigkeit richtige Ansteuerung der Antriebe 10 und 11. Hierfür ist eine elektronische Steuerung bzw. Regelung 12 vorgesehen, die als Eingangssignal den Drehwinkel $\varphi_6$ des Antriebs 6 sowie dessen Drehgeschwindigkeit $\bar{\omega}_6$ erhält. Die Steuerung bzw. Regelung 12 steuert - als "elektrische Welle" - ausgehend von diesen empfangenen Daten die Antriebe 10 und 11 so an, dass sich für beide Antriebe 10 und 11 dieselbe Drehgeschwindigkeit $\bar{\omega}_{10}$ bzw. $\bar{\omega}_{11}$ ergibt. Weiterhin werden die Gegenmassen 8, 9 so angetrieben, dass sich für den Drehwinkel $\varphi_{10}$ des Antriebs 10 bzw. für den Drehwinkel $\varphi_{11}$ des Antriebs 11 eine phasenrichtige Lage zum Drehwinkel $\varphi_6$ des Antriebs 6 ergibt: Der Kurbelarm 4 auf der einen Seite und die Kurbeln 15 und 16 auf der anderen Seite drehen gleich schnell, jedoch gegensinnig (s. eingezeichnete Drehrichtungspfeile), wobei die Gegenmassen 8, 9 ihren tiefsten Punkt erreicht haben, wenn das Ausgleichsgewicht 5 seine höchste Stellung erreicht.

Die Lagerungen der drei Drehmassen 5, 8 und 9 sind dabei so auf dem Antriebsgerüst 17 positioniert, dass sich nicht nur die Massenkräfte ausgleichen, sondern auch die Massenmomente. In an sich bekannter Weise werden die Höhenposition $y_2$ des Schwerpunkts des Walzgerüsts 2, die Position $x_5$ und $y_5$ des Drehpunkts des Ausgleichsgewichts 5, die Position $x_8$ und $y_8$ des Drehpunkts 13 der ersten Gegenmasse 8 und die Position $x_9$ und $y_9$ des Drehpunkts 14 der zweiten Gegenmasse 9 so gewählt, dass sich die Massenmomente, also die Produkte aus Massenkräften mit ihren jeweiligen wirksamen Hebelarmen, insgesamt saldieren.

Das Antriebssystem 1 hat damit einen sehr einfachen Aufbau, was nur geringe Investitionskosten verursacht. Andererseits ist ein guter Ausgleich von Massenkräften und Massenmomenten möglich, so dass ein schwingungsarmer Betrieb des Kaltpilgerwalzwerks möglich ist.

Das Erfindungskonzept eignet sich auch für den Einsatz nur einer einzigen Gegenmasse. Andererseits kann es vorteilhaft sein, zwei und auch mehrere Ausgleichsmassen in der beschriebenen Weise einzusetzen.

**Bezugszeichenliste**

| | |
|---|---|
| 1 | Antriebssystem |
| 2 | Walzgerüst |
| 3 | Kurbeltrieb |
| 4 | Kurbelarm bzw. Kurbelwelle |
| 5 | Ausgleichsgewicht |
| 6 | Antrieb |
| 7 | Schubstange |
| 8, 8' | erste Gegenmasse |
| 9, 9' | zweite Gegenmasse |
| 10 | Antrieb der ersten Gegenmasse |
| 11 | Antrieb der zweiten Gegenmasse |
| 12 | Steuerung bzw. Regelung |
| 13 | Drehpunkt bzw. Ausgleichswelle |
| 14 | Drehpunkt bzw. Ausgleichswelle |
| 15 | Kurbel |
| 16 | Kurbel |
| 17 | Antriebsgerüst |

| | |
|---|---|
| $\varphi_6$ | Drehwinkel des Antriebs 6 |
| $\bar{\omega}_6$ | Drehgeschwindigkeit des Antriebs 6 |
| $\varphi_{10}$ | Drehwinkel des Antriebs 10 |
| $\bar{\omega}_{10}$ | Drehgeschwindigkeit des Antriebs 10 |
| $\varphi_{11}$ | Drehwinkel des Antriebs 11 |
| $\bar{\omega}_{11}$ | Drehgeschwindigkeit des Antriebs 11 |

| | |
|---|---|
| $y_2$ | Höhenposition des Schwerpunkts des Walzgerüsts 2 |
| $x_5, y_5$ | Position des Drehpunkts des Ausgleichsgewichts 5 |
| $x_8, y_8$ | Position des Drehpunkts der ersten Gegenmasse 8 |
| $x_9, y_9$ | Position des Drehpunkts der zweiten Gegenmasse 9 |

| | |
|---|---|
| $F_2$ | Massenkraft des Walzgerüsts |
| $F_5$ | Massenkraft des Ausgleichsgewichts |
| $F_8$ | Massenkraft der ersten Gegenmasse 8 |
| $F_9$ | Massenkraft der zweiten Gegenmasse 9 |

**Patentansprüche**

1. Antriebssystem (1) für ein Walzwerk, insbesondere für ein Kaltpilgerwalzwerk, mit

   - mindestens einem hin- und herbewegbaren Walzgerüst (2),

   - mindestens einem Kurbeltrieb (3), der einen Kurbelarm (4) mit Ausgleichsgewicht (5) zum zumindest teilweisem Ausgleich der vom Walzgerüst (2) erzeugten Massenkräfte, einen Antrieb (6) und eine Schubstange (7) aufweist, die Walzgerüst (2) und Kurbelarm (4) gelenkig miteinander verbindet, und

- mindestens einer zum Ausgleich von Massenkräften und/oder Massenmomenten exzentrisch drehbar angeordneten Gegenmasse (8, 9),

**dadurch gekennzeichnet,**
**daß** die mindestens eine Gegenmasse (8, 9) von einem vom Antrieb (6) des Kurbeltriebs (3) unabhängigen, separaten Antrieb (10, 11) rotatorisch antreibbar ist.

2. Antriebssystem nach Anspruch 1,
**dadurch gekennzeichnet,**
**dass** der unabhängige Antrieb (10, 11) zum Antreiben der Gegenmasse (8, 9) im zur Drehrichtung des Kurbelarms (4) gegenläufigen Drehsinn geeignet ist.

3. Antriebssystem nach Anspruch 1 oder 2,
**dadurch gekennzeichnet,**
**dass** die Massen des Walzgerüsts (2), des Ausgleichsgewichts (5) und der Gegenmasse bzw. Gegenmassen (8, 9) so gewählt sind, dass die Gerüstmassenkräfte erster Ordnung im Betrieb des Antriebssystems (1) zumindest im wesentlichen ausgeglichen werden.

4. Antriebssystem nach einem der Ansprüche 1 bis 3,
**dadurch gekennzeichnet,**
**dass** je zwei Gegenmassen (8, 8', 9, 9') spiegelbildlich zur Mittelebene des Antriebssystems (1) angeordnet sind.

5. Antriebssystem nach einem der Ansprüche 1 bis 4,
**dadurch gekennzeichnet,**
**daß** eine die Gegenmasse (8, 9) aufnehmende Ausgleichswelle (13, 14) in Walzrichtung hinter der Kurbelwelle im wesentlichen auf gleicher Höhe mit der Kurbelwelle angeordnet ist.

6. Antriebssystem nach Anspruch 5
**dadurch gekennzeichnet,**
**daß** die Ausgleichswelle (13, 14) mittels eines Stirnradsatzes angetrieben ist, der ein Ritzel auf der Motorwelle umfaßt, das ein Zahnrad auf der Kurbelwelle mit Übersetzung und ein damit kämmendes gleichgroßes Zahnrad auf der Ausgleichswelle (13, 14) antreibt

7. Antriebssystem nach einem der Ansprüche 1 bis 6,
**dadurch gekennzeichnet,**
**dass** der separate Antrieb (10, 11 ) ein Elektromotor ist.

8. Antriebssystem nach Anspruch 7,
**dadurch gekennzeichnet,**
**dass** der Elektromotor ein Servomotor ist.

9. Antriebssystem nach einem der Ansprüche 1 bis 5 und 7 oder 8,
**gekennzeichnet durch,**
Mittel (12) zum Steuern oder zum Regeln des separaten Antriebs (10, 11) in Abhängigkeit vom Drehwinkel ($\varphi_6$) und/oder der Drehgeschwindigkeit ($\overline{\omega}_6$) des Antriebs (6) des Kurbelarms (4).

10. Antriebssystem nach Anspruch 9,
**dadurch gekennzeichnet,**
**dass** die Mittel (12) zum Betreiben des Antriebs (6) des Kurbelarms (4) und des separaten Antriebs (10, 11) mit derselben Drehgeschwindigkeit ($\overline{\omega}_6$, $\overline{\omega}_{10}$, $\overline{\omega}_{11}$) geeignet sind.

11. Antriebssystem nach Anspruch 9 oder 10,
**dadurch gekennzeichnet,**
**dass** die Mittel (12) zum phasengenauen Betreiben des Antriebs (6) des Kurbelarms (4) und des separaten Antriebs (10, 11) geeignet sind.

12. Antriebssystem nach Anspruch 9, 10 oder 11,
**dadurch gekennzeichnet,**
**dass** die Mittel (12) zum drehgeschwindigkeits- und winkelsynchronen Betreiben des Antriebs (6) des Kurbelarms (4) und des separaten Antriebs (10, 11) geeignet sind.

13. Antriebssystem nach einem der Ansprüche 1 bis 12,
**dadurch gekennzeichnet,**
**dass** der Drehpunkt ($x_8$, $y_8$; $x_9$, $y_9$) der Gegenmasse (8, 9) so gewählt ist, dass unter Einbeziehung der Massenkräfte des Walzgerüsts (2) und/oder des Ausgleichsgewichts (5) die Massenmomente aller Massen des Antriebssystems (1) zumindest weitgehend ausgeglichen werden.

**Claims**

1. A drive system (1) for a rolling mill, particularly for a cold pilger rolling mill, comprising

- at least one reciprocating roll stand (2),

- at least one crank mechanism (3) that contains a crank arm (4) with a counter-weight (5) in order to at least partially compensate the inertial forces generated by the roll stand (2), a drive (6) and a connecting rod (7) for interconnecting the roll stand (2) and the crank arm (4) in an articulated fashion, and

- at least one counter-mass (8, 9) that is mounted such that it rotates eccentrically in order to compensate the inertial forces and/or moments of inertia,

**characterized in**
**that** the counter-mass or masses (8, 9) can be driven in a rotatory fashion by a separate drive (10, 11) that acts independently of the drive (6) of the crank mechanism (3).

2. The drive system according to Claim 1,
**characterized in**
**that** the independent drive (10, 11) for driving the counter-mass (8, 9) is able to rotate opposite to the rotating direction of the crank arm (4).

3. The drive system according to Claim 1 or 2,
**characterized in**
**that** the masses of the roll stand (2), the counter-weight (5) and the counter-mass or masses (8, 9) are chosen such that the roll stand's inertial forces of the first order are at least largely compensated during the operation of the drive system (1).

4. The drive system according to one of Claims 1-3,
**characterized in**
**that** two counter-masses (8, 8', 9, 9') are respectively arranged in the form of a mirror image referred to the center plane of the drive system (1).

5. The drive system according to one of Claims 1-4,
**characterized in**
**that** a balancing shaft (13, 14) for accommodating the counter-mass (8, 9) is arranged downstream of the crankshaft referred to the rolling direction and essentially at the same height as the crankshaft.

6. The drive system according to Claim 5,
**characterized in**
**that** the balancing shaft (13, 14) is driven by means of a cylindrical gear set that comprises a pinion gear on the motor shaft, wherein said pinion gear drives a toothed gear on the crankshaft with a certain gear ratio, as well as a toothed gear of the same size that is arranged on the balancing shaft (13, 14) and meshes with the toothed gear on the crankshaft.

7. The drive system according to one of Claims 1-6,
**characterized in**
**that** the separate drive (10, 11) consists of an electric motor.

8. The drive system according to Claim 7,
**characterized in**
**that** the electric motor consists of a servomotor.

9. The drive system according to one of Claims 1-5 and 7 or 8,
**characterized in**
**that** means (12) are provided for controlling or regulating the separate drive (10, 11) in dependence on the angle of rotation ($\varphi_6$) and/or the rotational speed ($\dot{\omega}_6$) of the drive (6) of the crank arm (4).

10. The drive system according to Claim 9,
**characterized in**
**that** the means (12) are suitable for operating the drive (6) of the crank arm (4) and the separate drive (10, 11) with the same rotational speed ($\dot{\omega}_6$, $\dot{\omega}_{10}$, $\dot{\omega}_{11}$).

11. The drive system according to Claim 9 or 10,
**characterized in**
**that** the means (12) are suitable for the exact in-phase operation of the drive (6) of the crank arm (4) and of the separate drive (10, 11).

12. The drive system according to Claim 9, 10 or 11,
**characterized in**
**that** the means (12) are suitable for operating the drive (6) of the crank arm (4) and the separate drive (10, 11) with synchronous rotational speeds and synchronous angles of rotation.

13. The drive system according to one of Claims 1-12,
**characterized in**
**that** the center of motion ($x_8$, $y_8$; $x_9$, $y_9$) of the counter-mass (8, 9) is chosen such that, when taking into account the inertial forces of the roll stand (2) and/or the counter-weight (5), the moments of inertia of all masses of the drive system (1) are at least largely compensated.

**Revendications**

1. Système d'entraînement pour laminoir, notamment pour laminoir à pas de pèlerin froid, comportant

- au moins une cage de laminoir déplaçable en va-et-vient (2),

- au moins une transmission à manivelle (3) qui présente un bras de manivelle (4) avec un contre-poids (5) pour équilibrer au moins partiellement les forces d'inertie générées par la cage de laminoir (2), une commande (6) et une barre de poussée (7), qui relie de manière articulée l'un à l'autre la cage de laminoir (2) et le bras de manivelle (4), et

- au moins une contre-masse (8, 9) disposée de manière à pouvoir tourner excentriquement pour équilibrer les forces d'inertie et/ou les couples d'inertie,

**caractérisé en ce que**
l'au moins une contre-masse (8, 9) peut être entraînée en rotation par une commande séparée (10, 11) indépendante de la commande (6) de la transmission à manivelle (3).

2. Système d'entraînement selon la revendication 1, **caractérisé en ce que**
la commande indépendante (10, 11) servant à entraîner la contre-masse (8, 9) est appropriée dans le sens de rotation inverse au sens de rotation du bras de manivelle (4).

3. Système d'entraînement selon la revendication 1 ou 2,
**caractérisé en ce que**
les masses de la cage de laminoir (2), du contrepoids (5) et de la contre-masse ou des contre-masses (8, 9) sont choisies de manière à équilibrer du moins sensiblement les forces d'inertie de premier ordre de la cage pendant le fonctionnement du système d'entraînement (1).

4. Système d'entraînement selon l'une quelconque des revendications 1 à 3,
**caractérisé en ce que**
à chaque fois deux contre-masses (8, 8', 9, 9') sont disposées symétriquement en miroir par rapport au plan médian du système d'entraînement (1).

5. Système d'entraînement selon l'une quelconque des revendications 1 à 4,
**caractérisé en ce que**
un arbre d'équilibrage (13, 14) recevant la contre-masse (8, 9) est disposé dans le sens de laminage derrière l'arbre à manivelle sensiblement à la même hauteur que l'arbre à manivelle.

6. Système d'entraînement selon la revendication 5, **caractérisé en ce que**
l'arbre d'équilibrage (13, 14) est entraîné au moyen d'un jeu de roues droites qui comprend sur l'arbre moteur un pignon qui entraîne une roue dentée sur l'arbre à manivelle avec un rapport de transmission et entraîne une roue dentée ainsi rasante de même dimension sur l'arbre d'équilibrage (13, 14).

7. Système d'entraînement selon l'une quelconque des revendications 1 à 6,
**caractérisé en ce que**
la commande séparée (10, 11) est un moteur électrique.

8. Système d'entraînement selon la revendication 7, **caractérisé en ce que**
le moteur électrique est un servomoteur.

9. Système d'entraînement selon l'une quelconque des revendications 1 à 5 et 7 ou 8,
**caractérisé par**
des moyens (12) de contrôle ou de régulation de la commande séparée (10, 11) en fonction de l'angle de rotation ($\varphi_6$) et/oi de la vitesse de rotation ($\omega_6$) de la commande (6) du bras de manivelle (4).

10. Système d'entraînement selon la revendication 9, **caractérisé en ce que**
les moyens (12) sont appropriés pour faire fonctionner la commande (6) du bras de manivelle (4) et de la commande séparée (10, 11) à la même vitesse de rotation ($\omega_6$, $\omega_{10}$, $\omega_{11}$).

11. Système d'entraînement selon la revendication 9 ou 10,
**caractérisé en ce que**
les moyens (12) sont appropriés pour faire fonctionner en phases précises la commande (6) du bras de manivelle (4) et de la commande séparée (10,11).

12. Système d'entraînement selon la revendication 9, 10 ou 11,
**caractérisé en ce que**
les moyens (12) sont adaptés pour faire fonctionner de manière synchrone au niveau de la vitesse de rotation et de l'angle la commande (6) du bras de manivelle (4) et de la commande séparée (10, 11).

13. Système d'entraînement selon l'une quelconque des revendications 1 à 12,
**caractérisé en ce que**
le point de rotation ($x_8$, $y_8$ ; $x_9$, $y_9$) de la contre-masse (8, 9) est choisi de manière à ce qu'en faisant intervenir les forces d'inertie de la cage de laminoir (2) et/ou du contre-poids (5), on équilibre du moins dans une large mesure les couples d'inertie de toutes les masses du système d'entraînement (1).

$Y_9$

17

9,9'

11

14

16

$F_9$

$X_9$

$\varphi_{11}, \omega_{11}$

$\varphi_6$

$\omega_6$

5

12

6

$\varphi_{10}, \omega_{10}$

$X_5$

4

10

15

8,8'

3

13

$F_5$

$F_8$

$Y_5$

1

$Y_8$

7

$Y_2$

$X_8$

$F_2$

2